# EUROPÄISCHE PATENTSCHRIFT

(11) **EP 0 457 944 B1**
(45) Veröffentlichungstag und Bekanntmachung des Hinweises auf die Patenterteilung: **14.09.1994**
(21) Anmeldenummer: 90109788.1
(22) Anmeldetag: 23.05.1990
(51) Int. Cl.: H02G 3/28, E04F 15/02

(54) **Formplatte für die Herstellung eines Kabelbodens**
Tile for making a cable-floor
Dalle pour construire un faux-plancher pour câble

(43) Veröffentlichungstag der Anmeldung: 27.11.1991
(73) Patentinhaber: Petz, Karl-Heinz, D-24558 Henstedt-Ulzburg (DE)
(72) Erfinder: Petz, Karl-Heinz, D-24558 Henstedt-Ulzburg (DE)
(74) Vertreter: UEXKÜLL & STOLBERG

(56) Entgegenhaltungen:
- EP-A- 0 263 583
- WO-A-88/03207
- DE-A- 3 041 624

## Beschreibung

Die Erfindung betrifft eine Formplatte für die Herstellung eines Kabelbodens.

Eine derartige Formplatte ist aus der DE Gebrauchsmusterschrift G 86 04 531.8 des Anmelders bekannt. Dort ist die Formplatte ebenso wie bei der vorliegenden Erfindung aus einem Dämmstoff hergestellt, in den die Kanäle von der Unterseite eingefräst sind.

Aus der WO-A-8 803 207 sind Formplatten mit zueinander komplementären Verzahnungen bekannt, so daß zwei Formplatten im wesentlichen ohne Spalt aneinanderfügbar sind.

Es ist **Aufgabe** der Erfindung, die bekannte Formplatte dahingehend weiterzubilden, daß im Gebrauch mit in die Kanäle eingelegten oder eingezogenen Kabeln, insbesondere elektrische Leitungen, diese Leitungen zuverlässig voneinander abgeschirmt sind, so daß sich die um die Kabel bzw. Leitungen im Falle eines Stromflusses entstehenden elektrischen Felder nicht gegenseitig stören.

Zur **Lösung** dieser Aufgabe dient eine Formplatte für die Herstellung eines Kabelbodens, mit: Einer Unterseite, die im Gebrauch auf einer Gebäudedecke oder Deckenkonstruktion aufliegt; einer Oberseite, auf die im Gebrauch eine Gehschicht oder Fußbodenschicht aufgebracht wird und die zu der Unterseite eine im wesentlichen parallele Fläche bildet; zwei zu der Unterseite bzw. Oberseite senkrechte, im wesentlichen ebenfalls parallele Stirnseiten, die durch den Körper der Formplatte voneinander getrennt sind; zwei die Stirnseiten verbindende Seitenflächen; wobei in dem Rörper Kanäle angeordnet sind, die zur Unterseite der Formplatte hin offen sind; wobei die Stirnseiten und die Seitenflächen zueinander derart komplementäre Verzahnungen aufweisen, daß jeweils zwei Formplatten im wesentlichen ohne Spalt aneinanderfügbar sind; dadurch gekennzeichnet, daß die Innenseiten der Kanäle, die Stirnseiten und die Seitenflächen mit einem elektrisch leitfähigen Überzug versehen sind.

Dadurch wird erreicht, daß die elektrischen Felder, welche die in den Kanälen verlegten elektrischen Kabel oder Leitungen umgeben, nicht auf in benachbarten Kanälen verlegte Kabel oder Leitungen übergreifen und dort Störimpulse hervorrufen können, die heutzutage bei der fortschreitenden Anwendung von elektrischen und elektronischen Geräten im Büro oder Haushalt zu Betriebsstörungen führen können. Die in den Fußboden bzw. die Deckenkonstruktion abgestrahlten Felder bleiben dabei ohne Einfluß.

Vorteilhafte Ausgestaltungen der Erfindung ergeben sich aus den Unteransprüchen.

Als Material für die Formplatte ist jeder feste Dämmstoff geeignet, beispielsweise Styropor, Holzfaser, Mineralfaser (wie Steinwolle oder Glaswolle etc.), Kork, gebundene Naturfasern (z.B. Kokos) oder extrudierte Kunststoffschäume, die einen geschlossen-zelligen Aufbau haben.

Als leitfähige Beschichtung ist beispielsweise ein elektrisch leitfähiger Graphitüberzug geeignet, der von der Firma Acheson unter dem Warenzeichen ELECTRODAG® 5405A vertrieben wird. Dieser Graphitüberzug läßt sich in einer Schichtdicke von 25 bis 50 µm aufbringen, wobei das Aufbringen durch Aufsprühen mit einem Sprühdruck von 2 bis 2,5 bar und einem Düsendurchmesser von 1 bis 2 mm erfolgt. Der Widerstand der ausgehärteten Schicht beträgt 20 Ω/m² bei 25 µm Schichtdicke. Die Dauereinsatztemperatur beträgt 150°C. Andere geeignete leitfähige Überzüge sind beispielsweise Metallfolien, Drahtgeflechte o.ä..

Die Erfindung wird im folgenden anhand eines Ausführungsbeispiels näher erläutert; es zeigen:
- Figur 1: ein perspektivisches Ausführungsbeispiel einer Formplatte; und
- Figur 2: die Art der Verlegung mehrerer Formplatten zu einem Kabelboden.

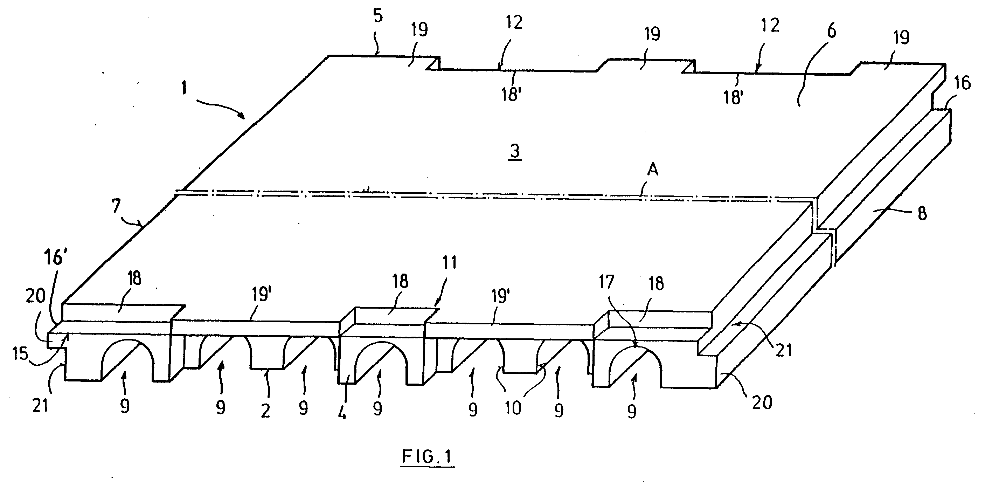

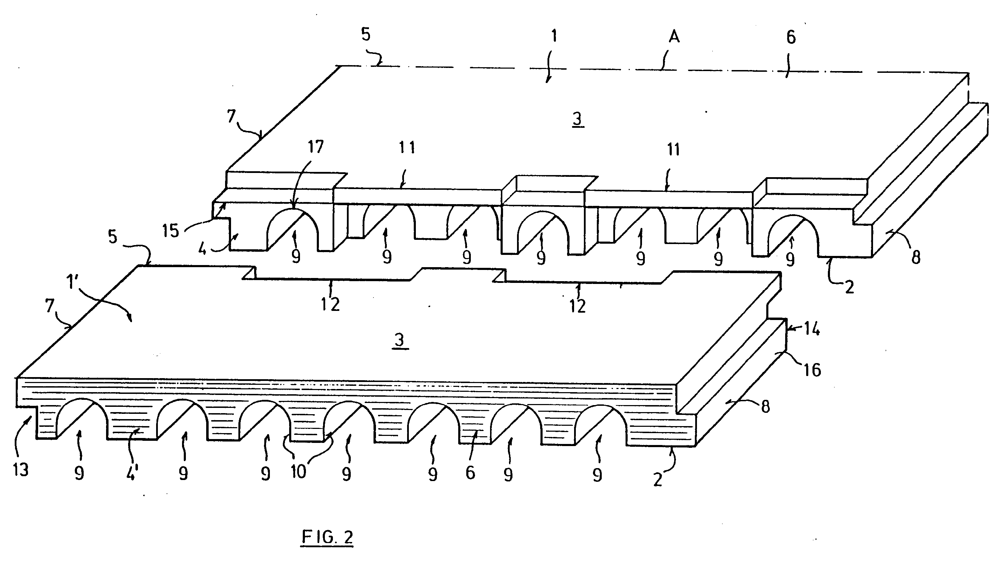

Figur 1 zeigt eine erfindungsgemäße Formplatte 1 mit zwei strichpunktierten Trennlinien A, die andeuten sollen, daß die Formplatte 1 in einer Ausführungsform geradflächig wie in Figur 2 dargestellt, abschließen kann, während in einer anderen Ausführungsform mehrere gleichartige Formplatten zu einem Kabelboden aneinander gelegt sind. Hierauf wird später noch näher eingegangen.

Die in Figur 1 erkennbare Formplatte 1 besitzt einen Körper 6, der aus einem Dämmstoff besteht. Als Dämmstoffe kommen die weiter oben genannten Materialien in Frage. Der Körper 6 bildet in einer Ausführungsform eine Platte mit einer Breite von etwa 500 mm, einer Länge von etwa 1 000 mm und einer Höhe von etwa 50 mm. Es ist klar, daß die Abmessungen ohne weiteres an den jeweiligen Anwendungsfall angepaßt werden können. Die Formplatte 1 besitzt demnach eine Unterseite 2, eine dazu parallele Oberseite 3, zwei in der Regel zueinander parallele Stirnseiten 4 und 5 und zwei die Stirnseiten verbindende Seitenflächen 7 und 8. Die Stirnseiten 4 und 5 liegen also ebenso wie die Seitenflächen 7 und 8 im Abstand zueinander. In der Draufsicht hat die Formplatte 1 die Form eines Rechtecks. In dem Körper 6 der Formplatte 1 sind von der Unterseite 2 her Kanäle 9 eingeformt, die sich über die gesamte Länge der Formplatte 1 erstrecken und im Abstand zueinander angeordnet sind. In einer bevorzugten Ausführungsform verlaufen die Kanäle 9 parallel zueinander und außerdem parallel zu den Seitenflächen 7 und 8. Die Kanäle 9 sind zur Unterseite 2 hin offen. Durch Aneinanderlegen mehrerer Formplatten 1 ergeben sich somit durchgehende Kanäle in der daraus hergestellten Bodenkonstruktion, die das nachträgliche Verlegen von elektrischen Leitungen oder Kabeln im Boden erlauben.

Um eine sichere Verbindung von benachbarten Formplatten 1 und 1′ (siehe Figur 2) zu erreichen, sind in einer Ausführungsform die Stirnseiten 4 und 5 jeder Formplatte 1 mit Verzahnungen 11 und 12 versehen, die zueinander komplementär sind. Dies bedeutet also, daß dort, wo in der ersten Stirnseite 4 Ausnehmungen 18 vorgesehen sind, befinden sich im entsprechenden Bereich der gegenüberliegenden zweiten Stirnseiten 5 Vorsprünge 19 von gleichere Höhe, Breite und Tiefe. Umgekehrt sind dort, wo in der ersten Stirnseite 4 Vorsprünge 19′ vorgesehen sind, im entsprechenden Bereich der anderen Stirnseite 5 Ausnehmungen 18′ gebildet.

Die Verzahnungen 11 und 12 in den Stirnseiten 4 und 5 der Formplatte 1 bilden darüber hinaus eine erste Stufe 15, die von der Unterseite 2 her gemessen höher als der Scheitel 17 der Kanäle 9 liegt. In diesem Zusammenhang wird darauf hingewiesen, daß die Kanäle 9 in der Regel alle gleiche Höhe haben, so daß ihre Scheitel 17 etwa auf der gleichen Höhe liegen. Dadurch, daß die Stufe 15 höher als die Scheitel 17 der Kanäle 9 liegt, wird erreicht, daß die Verzahnungen 11 und 12 nicht in die Kanäle 9 hineinschneiden und diese dadurch nach oben öffnen.

Unter der Annahme, daß die Richtung des Verlaufs der Kanäle 9 als die "Längsrichtung" der Formplatte bezeichnet wird, sei der Verlauf der Stirnseiten 4 und 5 als "Querrichtung" bezeichnet. Um nun in Querrichtung Formplatten 1 der erfindungsgemäßen Art aneinander zu legen, ist in den Seitenflächen 7 und 8 eine zweite Stufe 16 vorgesehen, die ebenfalls komplementär zu der jeweils in der gegenüberliegenden Seitenfläche 7 bzw. 8 gebildeten Stufe 16′ ist. Auf diese Weise können wiederum gleichartige Formplatten 1 im Prinzip ohne Spaltbildung eng aneinander gelegt werden. Man erkennt in Figur 1, daß die Stufe 16, 16′ jeweils von einem Vorsprung 20 und einer Ausnehmung 21 gebildet ist, die parallel zur Längserstreckung der Seitenfläche 7 bzw. 8 verlaufen. An der linken Seitenfläche 7 befindet sich der Vorsprung 20 im Bereich der Oberseite 3 der Formplatte 1, während er an der rechten Seitenfläche 8 im Bereich der Unterseite 2 vorgesehen ist.

Figur 2 zeigt zwei erfindungsgemäße Formplatten 1 und 1′ in auseinander gezogener Darstellung, die den Aufbau einer Bodenkonstruktion andeuten. Die obere oder hintere Formplatte 1 entspricht der in Figur 1 dargestellten Formplatte. Die untere Formplatte 1′ soll ein Randelement andeuten, bei dem die vordere Stirnseite 4′ stumpf abgeschnitten ist, so daß dort keine Verzahnung mehr vorliegt. Man erkennt aus Figur 2 aber deutlich, wie die Verzahnungen 11 und 12 der Formplatten 1 und 1′ ineinander greifen können und daß sich die Kanäle 9 durch die gesamte Bodenkonstruktion fluchtend erstrecken.

Ein wesentliches Merkmal der Erfindung besteht nun darin, daß die Innenseiten 10 der Kanäle 9, die Stirnseiten 4 und 5 einschließlich ihrer Verzahnungen 11 und 12 sowie die Seitenflächen 7 und 8 mit ihren Verzahnungen 13 und 14 mit einem elektrisch leitfähigen Überzug versehen sind. In einer Ausführungsform ist der elektrisch leitfähige Überzug ein Graphitüberzug, beispielsweise des Typs ELECTRODAG ® 5405 A der Fira Acheson. Er bietet eine ausgezeichnete Abschirmung gegen elektromagnetische Interferenz und außerdem Schutz gegen elektrostatische Entladungen. Auch bei der Einwirkung von Hitze, Kälte, Feuchtigkeit oder Salz behält der Überzug seinen niedrigen elektrischen Widerstand von etwa 20 Ω/m² bei 25 µm Schichtdicke. ELECTRODAG® 5405 A wird durch einfaches Sprühen aufgetragen, beispielsweise nach zusätzlicher Verdünnung mit Wasser. Als Sprühdruck werden 2 bis 2,5 bar bei einem Düsendurchmesser von 1 bis 2 mm empfohlen. Weitere Einzelheiten lassen sich der Produktinformation der Firma Acheson entnehmen.

Auf diese Weise wird erreicht, daß bei einer Bodenkonstruktion, die aus den erfindungsgemäßen Formplatten gebildet ist, die gesamte Unterseite und die Grenzflächen zu benachbarten Formplatten elektrisch leitfähig sind, so daß sie für die darinnen oder darunter verlegten Kabel und Leitungen einen sogenannten Faradayschen Käfig bilden, der die Kabel oder Leitungen voneinander abschirmt, die in benachbarten oder in größerem Abstand geführten Kanälen verlaufen.

## Patentansprüche

1. Formplatte für die Herstellung eines Kabelbodens, mit:
- einer Unterseite (2), die im Gebrauch auf einer Gebäudedecke oder Deckenkonstruktion aufliegt;
- einer Oberseite (3), auf die im Gebrauch eine Gehschicht oder Fußbodenschicht aufgebracht wird und die zu der Unterseite (2) eine im wesentlichen parallele Fläche bildet;
- zwei zu der Unterseite (2) bzw. Oberseite (3) senkrechte, im wesentlichen ebenfalls parallele Stirnseiten (4,5), die durch den Körper (6) der Formplatte (1) voneinander getrennt sind;
- zwei die Stirnseiten (4,5) verbindende Seitenflächen (7,8);
- wobei in dem Körper (6) Kanäle (9) angeordnet sind, die zur Unterseite (2) der Formplatte (1) hin offen sind;
- wobei die Stirnseiten (4,5) und die Seitenflächen (7,8) zueinander derart komplementäre Verzahnungen (11,12 bzw. 13,14) aufweisen, daß jeweils zwei Formplatten (1,1′) im wesentlichen ohne Spalt aneinanderfügbar sind;
**dadurch gekennzeichnet**,
- daß die Innenseiten (10) der Kanäle (9), die Stirnseiten (4,5) und die Seitenflächen (7,8) mit einem elektrisch leitfähigen Überzug versehen sind.

2. Formplatte nach Anspruch 1, **dadurch gekennzeichnet**, daß die Kanäle (9) parallel zueinander verlaufen.

3. Formplatte nach Anspruch 1, **dadurch gekennzeichnet**, daß der elektrisch leitfähige Überzug ein Graphitüberzug ist.

4. Formplatte nach Anspruch 3, **dadurch gekennzeichnet**, daß der elektrisch leitfähige Graphitüberzug ELECTRODAG® 5405A ist.

5. Formplatte nach Anspruch 1, **dadurch gekennzeichnet**, daß der elektrisch leitfähige Überzug eine Metallkaschierung, ein Drahtgeflecht, ein Metallgewebe o. ä. ist.

6. Formplatte nach Anspruch 1, **dadurch gekennzeichnet**, daß sich die Verzahnungen (11,12 bzw. 13,14) nicht über die gesamte Höhe der Stirnseiten (4,5) bzw. der Seitenflächen (7,8) geradflächig erstrecken, sondern eine Stufenbildung aufweisen.

7. Formplatte nach Anspruch 6, **dadurch gekennzeichnet**, daß die in den Stirnseiten (4,5) vorgesehene Stufe (15) nicht auf der gleichen Höhe wie die in den Seitenflächen (13,14) angeordnete Stufe (16) liegt.

8. Formplatte nach Anspruch 7, **dadurch gekennzeichnet**, daß die Stufe (15) in den Stirnflächen (4,5) näher zur Oberseite (3) der Formplatte (1) als der Scheitel (17) der Kanäle (9) liegt.

## Claims

1. Match plate for forming a cable floor, comprising:
- a bottom side (2), which rests during use upon a building floor or sealing structure;
- a top side (3) upon which is applied during use a walking layer or floor layer and having a substantially parallel surface relative to the bottom side (2);
- two front sides (4,5) perpendicular to the bottom side (2) or the top side (3) and also being substantially parallel but spaced apart by the body (6) of the match plate (1);
- two side faces (7,8) connecting the front sides (4,5);
- channels (9) provided within said body (6) and opening towards the bottom side (2) of the match plate (1);
- with the front sides (4,5) and the side faces (7,8) having complementary teeth (11,12 or 13, 14) such that two match plates (1, 1′) can abut each other substantially without a gap;
**characterized** in that
- the interior walls (10) of the channels (9), the front sides (4,5) and the side faces (7,8) are coated with an electrically conductive coating.

2. Match plate according to Claim 1, **characterized** in that the channels (9) extend parallel to each other.

3. Match plate according to Claim 1, **characterized** in that the electrically conductive coating is a graphite coating.

4. Match plate according to Claim 3, **characterized** in that the electrically conductive graphite coating is ELECTRODAG® 5405A.

5. Match plate according to Claim 1, **characterized** in that the electrically conductive coating is a metal plating, a wire net a metal grid or similar.

6. Match plate according to Claim 1 **characterized** in that the teeth (11,12 or 13,14) do not extend over the entire height of the front sides (4,5) or the side faces (7,8) as a straight face, but in form of a step.

7. Match plate according to Claim 6, **characterized** in that the step (15) provided in the front sides (4,5) has not the same height than the step (16) provided in the side faces (13,14).

8. Match plate according to Claim 7, **characterized** in that the step (15) in the front faces (4,5) has a shorter distance to the top side (3) of the match plate (1) than the apex (17) of the channels (9).

## Revendications

1. Dalle pour construire un faux-plancher pour câbles avec :
- une face inférieure (2) qui repose, lors de l'utilisation, sur un plancher de bâtiment ou une construction de plancher ;
- une face supérieure (3) sur laquelle, lors de l'utilisation, une couche pour marcher ou une couche de sol est appliquée et qui forme une surface substantiellement parallèle à la face inférieure (2) ;
- deux faces frontales également substantiellement parallèles (4, 5), perpendiculaires à la face inférieure (2) ou à la face supérieure (3), qui sont séparées l'une de l'autre par le corps (6) de la dalle (2) ;
- deux faces latérales (7, 8) qui relient les faces frontales (4, 5) ;
- des canaux (9) étant placés dans le corps (6) qui sont ouverts vers la face inférieure (2) de la dalle (1) ;
- les faces frontales (4, 5) et les faces latérales (7, 8) présentant des dentures (11, 12 ou 13, 14) complémentaires l'une par rapport à l'autre de telle manière que respectivement deux dalles (1, 1′) peuvent être assemblées l'une à l'autre substantiellement sans fente ;
**caractérisée en ce**
- que les faces intérieures (10) des canaux (9), les faces frontales (4, 5) et les faces latérales (7, 8) sont pourvues d'un revêtement électroconducteur.

2. Dalle selon la revendication 1, **caractérisée en ce** que les canaux (9) sont parallèles l'un à l'autre.

3. Dalle selon la revendication 1, **caractérisée en ce** que le revêtement électroconducteur est un revêtement de graphite.

4. Dalle selon la revendication 3, **caractérisée en ce** que le revêtement électroconducteur est ELECTRODAG® 5405A.

5. Dalle selon la revendication 1, **caractérisée en ce** que le revêtement électroconducteur est un placage de métal, un treillis en fil, un tissu métallique ou similaire.

6. Dalle selon la revendication 1, **caractérisée en ce** que les dentures (11, 12 ou 13, 14) ne s'étendent pas sur toute la hauteur des faces frontales (4, 5) ou des faces latérales (7, 8) en surface droite mais au contraire présentent une formation de gradins.

7. Dalle selon la revendication 6, **caractérisée en ce** que le gradin (15) prévu dans les faces frontales (4, 5) ne se trouve pas à la même hauteur que le gradin (16) placé dans les faces latérales (13, 14).

8. Dalle selon la revendication 7, **caractérisée en ce** que le gradin (15) dans les faces frontales (4, 5) se trouve plus près de la face supérieure (3) de la dalle (1) que le sommet (17) des canaux (9).
